**Europäisches Patentamt**

**European Patent Office**

**Office européen des brevets**

(19)

(11) Veröffentlichungsnummer : **0 429 466 B1**

(12) **EUROPÄISCHE PATENTSCHRIFT**

(45) Veröffentlichungstag der Patentschrift :
**12.08.92 Patentblatt 92/33**

(51) Int. Cl.$^5$ : **F16D 13/54**

(21) Anmeldenummer : **89907755.6**

(22) Anmeldetag : **07.07.89**

(86) Internationale Anmeldenummer :
**PCT/EP89/00781**

(87) Internationale Veröffentlichungsnummer :
**WO 90/01640 22.02.90 Gazette 90/05**

(54) **REIBUNGSKUPPLUNG.**

(30) Priorität : **12.08.88 DE 3827349**

(43) Veröffentlichungstag der Anmeldung :
**05.06.91 Patentblatt 91/23**

(45) Bekanntmachung des Hinweises auf die
Patenterteilung :
**12.08.92 Patentblatt 92/33**

(84) Benannte Vertragsstaaten :
**DE FR GB IT**

(56) Entgegenhaltungen :
**CH-A- 274 955**
**DE-A- 1 925 957**
**DE-A- 3 612 619**
**DE-C- 3 543 871**
**FR-A- 824 072**
**GB-A- 772 682**
**US-A- 2 827 994**

(73) Patentinhaber : **VOLKSWAGEN**
**AKTIENGESELLSCHAFT**
**W-3180 Wolfsburg (DE)**

(72) Erfinder : **WEISSBRICH, Alfons**
**Paul-Jonas-Meier-Str. 26**
**W-3300 Braunschweig (DE)**
Erfinder : **NIKL, Horst**
**J.-F.-Kennedy-Allee 70**
**W-3180 Wolfsburg 1 (DE)**
Erfinder : **WAHNSCHAFFE, Nikolaus**
**Wittinger Str. 8**
**W-3180 Wolfsburg 11 (DE)**

(74) Vertreter : **Grützmann, Dieter, Dipl.-Ing. et al**
**c/o Volkswagen AG Patentwesen Postfach**
**W-3180 Wolfsburg 1 (DE)**

## Beschreibung

Die Erfindung betrifft eine Reibungskupplung der im Oberbegriff des Patentanspruchs 1 genannten Art, wie sie beispielsweise aus der DE-OS 19 25 957 bekannt ist.

Die Größe des von einer solchen Reibungskupplung übertragbaren Drehmoments hängt u. a. von der Gesamtzahl der zusammenwirkenden Kupplungslamellen, d. h. der mit scheibenförmigen oder konischen Reibflächen versehenen Kupplungsglieder, vom mittleren Durchmesser der aneinander zur Anlage kommenden Reibflächen der Kupplungslamellen und von der Höhe des von der Betätigungs-bzw. Druckvorrichtung auf die mit den Kupplungslamellen zusammenwirkenden Druckplatte axial ausgeübten Druckes ab.

Um die auf die miteinander in Reibeingriff befindlichen Reibflächen der Kupplungslamellen ausgeübte Axialkraft - und damit das übertragbare Drehmoment der Reibungskupplung zu erhöhen, sind bei der bekannten Reibungskupplung die von der Druckplatte am weitesten entfernt liegenden beiden Kupplungslamellen auf ihren sich unmittelbar gegenüberliegenden Lamellenflächen konzentrisch zur Kupplungsdrehachse mit jeweils korrespondierenden, axial rampenförmig ansteigenden bzw. abfallenden Flächenbereich versehen. Die rampenförmigen Flächenbereiche dieser beiden "Drucklamellen" sind derart ausgebildet und angeordnet, daß die beiden aneinanderliegenden Drucklamellen bei einer Relativverdrehung axial auseinandergedrückt werden, wodurch auf die Kupplungslamellen eine zusätzliche axiale Kraft ausgeübt wird, welche die über die eigentliche Druckplatte aufgebrachte Axialkraft unterstützt.

Die Druckplatte dieser bekannten Reibungskupplung muß dabei - genau wie bei sonst üblichen Reibungskupplungen des Lamellentyps ohne axialkraftverstärkende Drucklamellen - erst einen gewissen Weg zurücklegen, ehe die Kupplung voll zum Eingriff gelangt. Die Größe dieses Betätigungsweges hängt von der Elastizität des Kupplungslamellenpakets und der Kupplungsluft, d. h. der Summe der bei nicht betätigter Kupplung zwischen den einzelnen Kupplungslamellen bestehenden axialen Spiele, ab. Je größer also die Gesamtzahl der Kupplungslamellen ist, desto größer ist der zurückzulegende Betätigungsweg. Bei auftretendem Reibbelagverschleiß vergrößert sich die Kupplungsluft entsprechend, so daß der zurückzulegende Betätigungsweg ebenfalls größer wird.

In vielen Anwendungsfällen sind größere Betätigungswege oder aber sich im Laufe der Betriebszeit infolge Reibbelagverschleißes o. ä. deutlich vergrößernde Betätigungswege nicht akzeptabel, z. B. weil knapper Bauraum nur einen begrenzten Betätigungsweg zuläßt oder aber weil dadurch das Zeitverhalten des Kupplungsvorganges unzulässig verschlechtert wird.

Einen solchen kritischen Anwendungsfall stellen beispielsweise solche - z. B. aus der DE-OS 36 12 619 bekannten - Kfz-Servolenkeinrichtungen dar, bei denen das lenkkraftunterstützende Servomoment nicht von einer hydraulischen Kolben/Zylinder-Anordnung, sondern von einem umlaufenden, vorzugsweise elektrischen Servomotor geliefert und über mindestens eine Reibungskupplung auf die Lenkwelle der Lenkung übertragen wird. Bei einer solchen Kraftfahrzeug-Servolenkeinrichtung muß der Betätigungsweg der eingesetzten Reibungskupplung vergleichsweise klein sein und möglichst klein bleiben, da die Servo-Unterstützung bereits bei sehr kleinen Winkelgraden einsetzen soll.

Der Erfindung liegt daher die Aufgabe zugrunde, eine Reibungskupplung, der im Oberbegriff des Patentanspruchs 1 genannten Art zu schaffen, welche sich durch einen vergleichsweise kleinen und darüber hinaus klein bleibenden Betätigungsweg auszeichnet und dadurch u. a. geeignet ist, in elektromotorisch betriebenen Kraftfahrzeug-Servo-Lenkeinrichtungen eingesetzt zu werden.

Diese Aufgabe wird erfindungsgemäß durch die Merkmale des Patentanspruchs 1 gelöst. Vorteilhafte Ausgestaltungen und Weiterbildungen der Erfindung sind in den Unteransprüchen angegeben.

Anhand eines in der Zeichnung dargestellten Ausführungsbeipieles wird die Erfindung nachstehend näher erläutert.

In der Zeichnung zeigen

Fig. 1 den Längsschnitt einer Reibungskupplung gemäß der Erfindung und

Fig. 2 die perspektivische Darstellung eines Ausschnitts einer in dieser Reibungskupplung eingesetzten Drucklamelle.

Das dargestellte Ausführungsbeispiel zeigt einen Ausschnitt einer bekannten Kfz-Servolenkeinrichtung nach Art der DE-OS 36 12 619, bei der das von einem nur in einer Drehrichtung umlaufenden Servomotor gelieferte Servomoment je nach Wirkrichtung des Lenkmoments selbsttätig entweder über die eine oder die andere von zwei Reibungskupplungen auf die Lenkwelle der Lenkung übertragen wird. Dargestellt ist eine dieser beiden Reibungskupplungen, die gemäß der Erfindung ausgebildet ist.

Diese Reibungskupplung besteht im wesentlichen aus einem von dem nicht weiter dargestellten Servomotor über ein Ritzel 8 angetriebenen Kupplungsantrieb in Form einer topfförmigen Kupplungsglocke 1, einem konzentrisch dazu angeordneten wellenförmigen Kupplungsabtrieb 2 sowie mehreren zwischen Kupplungsantrieb und Kupplungsabtrieb liegenden und konzentrisch dazu angeordneten Kupplungslamellen 3 bzw. 4, welche axial verschiebbar und wechselweise verdrehfest mit der Kupplungsglocke 1 bzw. dem wellenförmigen Kupplungsabtrieb 2 verbunden sind. Für die verdrehfeste Verbindung sind in üblicher Weise die mit der Kupplungsglocke zusammenwirkenden Kupplungslamellen 3 (Außenlamellen) mit einer Außenverzahnung und die mit dem wellenförmigen Kupplungsabtrieb 2 zusammenwirkenden Kupplungslamellen 4 (Innenlamellen) mit einer Innenverzahnung versehen, welche in dazu korrespondierende Längsnuten 11 der Kupplungsglocke 1 bzw. Längsnuten 21 des Kupplungsabtriebs 2 eingreifen. In bekannter Weise können bei Bedarf auch mehr als nur zwei.Kupplungslamellen 3, 4 vorgesehen sein.

Durch eine auf dem Kupplungsabtrieb 2 gelagerte Druckplatte 5 wird auf die Kupplungslamellen 3, 4 eine diese in einen kuppelnden Reibeingriff bringende Axialkraft ausgeübt, wenn der wellenförmige Kupplungsabtrieb 2 in oben erwähnter Weise bei einem entsprechenden Lenkmoment in Pfeilrichtung verschoben wird; der wellenförmige Kupplungsabtrieb übt hierbei also gleichzeitig die Funktion einer axialen Druckvorrichtung aus.

Zwischen der Druckplatte 5 einerseits und dem Kupplungslamellenpaket 3/4 andererseits sind zwei speziell ausgebildete Lamellen, die Drucklamellen 6, 7 angeordnet. Deren sich unmittelbar gegenüberliegende Lamellenflächen sind jeweils konzentrisch zur Kupplungsdrehachse mit korrespondierenden, axial rampenförmig ansteigenden bzw. abfallenden Flächenbereichen 61, 71 etc. versehen, die derart ausgebildet und angeordnet sind, daß die beiden aneinander anliegenden Drucklamellen 6, 7 bei einer Relativverdrehung axial auseinandergedrückt werden.

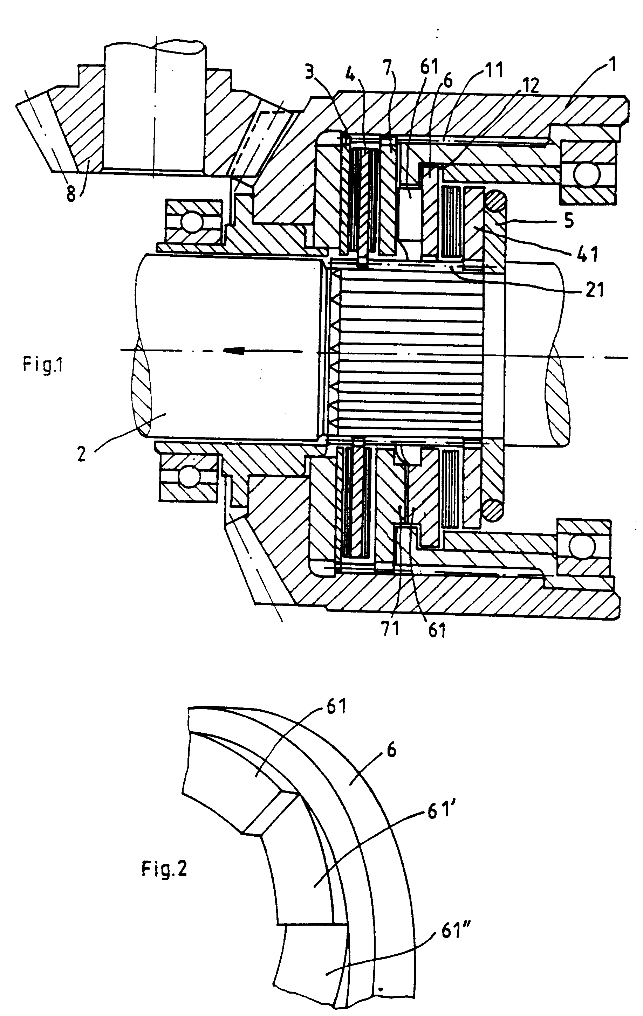

In Fig. 2 ist ein Ausschnitt der der Druckplatte 5 nächstgelegenen primären Drucklamelle 6 perspektivisch dargestellt, wobei drei der entlang dem Umfang verteilten rampenförmigen Flächenbereiche 61, 61' und 61" dargestellt sind. Die mit der primären Drucklamelle 6 zusammenwirkende sekundäre Drucklamelle 7 ist in entsprechender Weise, jedoch mit entgegengesetzter Steigungsrichtung der rampenförmigen Flächen ausgebildet.

Die voneinander abgewandten Lamellenflächen der Drucklamellen 6, 7 weisen Reibflächen auf, die denen der Kupplungslamellen entsprechen.

Die dem Kupplungslamellenpaket 3/4 benachbarte, d. h. von der Druckplatte 5 entfernter liegende sekundäre Drucklamelle 7 ist wie die Außenlamellen 3 axial verschiebbar und verdrehfest mit der Kupplungsglocke,1 verbunden, sie läuft also wie die Außenlamellen 3 mit der vom Ritzel 8 angetriebenen Kupplungsglocke 1 um.

Die zur Druckplatte 5 näher liegende primäre Drucklamelle 6 ist dagegen axial verschiebbar und verdrehbar gelagert; sie ist weder mit der Kupplungsglocke 1 noch mit dem wellenförmigen Kupplungsabtrieb 2 unmittelbar verdrehfest gekoppelt. Sie ist mit ihrem Außenumfang innerhalb einer in der Kupplungsglocke 1 gebildeten ringnutartigen Ausnehmung 12 mit axialem Spiel gelagert und kann sich an dieser axial abstützen.

Zwischen der primären Drucklamelle 6 und der Druckplatte 5 ist noch eine Kupplungslamelle 41 angeordnet, welche - über die vorerwähnten Längsnuten 21 - verdrehfest mit dem wellenförmigen Kupplungsabtrieb 2 verbunden ist. Im Ausführungsbeispiel ist zwischen der primären Drucklamelle 6 und der Kupplungslamelle 41 noch ein loser Ring aus geeignetem Reibmaterial dargestellt, der jedoch genausogut fester Bestandteil der primären Drucklamelle 6 oder der Kupplungslamelle 41 sein könnte, ähnlich wie bei der Innenlamelle 4 dargestellt. Es sind jedoch nicht grundsätzlich solche Reibflächen aus besonderem Reibmaterial erforderlich; grundsätzlich können in bekannter Weise die Lamellenflächen der Kupplungslamellen etc. selbst als Reibflächen dienen. Letztlich hängt es von den Anforderungen an die Reibungskupplung ab, welcher Art und Ausgestaltung die Kupplungslamellen etc. sind. Statt der dargestellten scheibenförmigen Lamellen könnten die Kupplungslamellen etc. z. B. auch konisch ausgebildet sein.

Die Funktionsweise der erfindungsgemäßen Reibungskupplung ist folgende: Solange der wellenförmige Kupplungsabtrieb 2 wegen Fehlens eines entsprechenden Lenkmoments axial nicht in Pfeilrichtung verschoben wird, befinden sich die Kupplungslamellen 3 und 4 außer Eingriff, d. h. von der vom Ritzel 8 angetriebenen Kupplungsglocke 1 wird kein Servomoment auf den Kupplungsabtrieb 2 übertragen. Die verdrehfest mit der Kupplungsglocke 1 verbundenen Außenlamellen 3 sowie die sekundäre Drucklamelle 7 rotieren entsprechend mit. Auch die mit axialem Spiel verdrehbar in der ringnutartigen Ausnehmung 12 der Kupplungsglocke 1 gelagerte primäre Drucklamelle 6 läuft entsprechend um, da sie über die axial vorspringenden rampenförmigen Flächenbereiche 61 bzw. 71 etc. von der sekundären Drucklamelle 7 mitgenommen wird.

Bei einer lenkmomentbedingten Axialverschiebung des wellenförmigen Kupplungsabtriebs 2 in Pfeilrichtung wird dieser als Druckvorrichtung wirksam und die verdrehfest auf ihm gelagerte Kupplungslamelle 41 wird durch die Druckplatte 5 - über den dazwischenliegenden Reibring - axial gegen die mit der Kupplungsglocke 1 frei umlaufende primäre Druckplatte 6 gedrückt; die dadurch zwischen der Kupplungslamelle 41 bzw. dem Reibring und der primären Drucklamelle 6 erzeugte Normalkraft bewirkt eine Reibkraft, durch welche die primäre Drucklamelle abgebremst wird. Durch die infolge der dabei auftretenden Drehzahldifferenz bewirkte Relativverdrehung zwischen ihnen werden die beiden Drucklamellen 6 und 7 durch ihre korrespondierenden rampenförmigen Flächenbereiche 61, 71 axial auseinanderbewegt und dadurch die sekundäre Drucklamelle 7 axial gegen das Kupplungslamellenpaket 3/4 gedrückt. Dadurch wird die Kupplungsluft des Lamellenpaketes beseitigt und die Kupplung betätigt, d. h. die Kupplungslamellen 3, 4 werden in ihren kuppelnden Reibeingriff gebracht.

Der zum Einkuppeln der Reibungskupplung erforderliche Betätigungsweg der Druckvorrichtung, im Ausführungsbeispiel also der erforderliche Axialweg des wellenförmigen Kupplungsabtriebs 2 in Pfeilrichtung, ist und bleibt auch bei längerer Betriebsdauer der Reibungskupplung vergleichsweise klein, unabhängig von der Gesamtzahl der Kupplungslamellen 3, 4 des Kupplungslamellenpaketes. Für die Betätigung der Kupplung müß der wellenförmige Kupplungsabtrieb 2 axial nämlich grundsätzlich nur so weit verschoben werden, daß die Kupplungslamelle 41 an der primären Drucklamelle 6 zur Anlage kommt. Hierfür ist nur ein recht kleiner Weg erforderlich, der sich auch im Laufe der Lebensdauer der Reibungskupplung nur geringfügig vergrößert, da er nur durch den Verschleiß der Reibfläche zwischen der primären Drucklamelle 6 und der Kupplungslamelle 41 beeinflußt wird. Der Belagverschleiß der Kupplungslamellen 3, 4 des Kupplungslamellenpakets und die dadurch bedingte Vergrößerung der Kupplungsluft bleibt dagegen auf den erforderlichen Betätigungsweg des wellenförmigen Kupplungsabtriebs 2 ohne Einfluß, da die zum Einkuppeln erforderliche Axialverschiebung der Kupplungslamellen 3, 4 durch die sich infolge der rampenförmigen Flächenbereiche 61/71 axial von der sekundären Drucklamelle fortbewegende sekundäre Drucklamelle 7 bewirkt wird.

Die erfindungsgemäße Reibungskupplung zeichnet sich durch einen kleinen, weitgehend konstant bleibenden Betätigungsweg für die Betätigungs- bzw. Druckvorrichtung der Kupplung aus, und zwar unabhängig von der Gesamtzahl der Kupplungslamellen des Kupplungslamellenpaketes. In ihr findet unter Verstärkung der auf die einzelnen Kupplungslamellen einwirkenden Normalkraft selbsttätig quasi ein Reibflächenverschleißausgleich statt. Sie eignet sich daher besonders gut für solche Anwendungsfälle, in denen die Raumverhältnisse nur kleine Betätigungswege zulassen und/oder in denen es darauf ankommt, daß die Reibungskupplung schnell bzw. bereits nach relativ geringen Betätigungswegen anspricht.

Das erfindungsgemäße Konzept ist nicht auf solche Reibungskupplungen beschränkt, bei denen ein wellenförmiger Kupplungsabtrieb gleichzeitig die Funktion des Schaltmechnismus', d. h. der die Druckplatte 5 axial verschiebenden Druckvorrichtung wahrnimmt. Es ist mit Vorteil auch bei Reibungskupplungen mit separaten Schaltmechanismen einsetzbar.

**Patentansprüche**

1. Axialkraftbetätigte Reibungskupplung, enthaltend

a) mehrere axial verschiebbare und wechselweise verdrehfest mit einem Kupplungsantrieb (Kupplungsglocke) und einem dazu konzentrischen Kupplungsabtrieb verbundene Kupplungslamellen (Außen- und Innenlamellen) mit scheibenförmigen oder konischen Reibflächen,

b) eine Druckvorrichtung mit - relativ zu den Kupplungslamellen - axial verschieblicher Druckplatte, über die auf die Kupplungslamellen eine diese in einen kuppelnden Reibeingriff bringende äußere Axialkraft aufbringbar ist und

c) zwei in Reihe zu der Druckplatte und den Kupplungslamellen angeordnete Drucklamellen, deren voneinander abgewandten Lamellenflächen den Kupplungslamellen entsprechende Reibflächen aufweisen und an deren sich gegenüberliegenden Lamellenflächen konzentrisch zur Kupplungsdrehachse jeweils korrespondierbare, axial rampenförmig ansteigende bzw. abfallende Flächenbereiche derart angeordnet sind, daß die aneinander anliegenden Drucklamellen bei einer Relativverdrehung auf die Kupplungslamellen eine zusätzliche axiale Kraft ausübend - axial auseinandergedrückt werden,

dadurch gekennzeichnet, daß die beiden Drucklamellen (6, 7) räumlich zwischen der Druckplatte (5) und den eigentlichen Kupplunglamellen (3, 4) angeordnet sind,

daß die zur Druckplatte (5) entfernter liegende sekundäre Drucklamelle (7) axial verschiebbar, aber verdrehfest mit dem Kupplungsantrieb (Kupplungsglocke 1) verbunden ist, während die zur Druckplatte (5) näher liegende primäre Drucklamelle (6) verdrehbar gelagert und mit ihrem Außenumfang innerhalb einer im Kupplungsantrieb (Kupplungsglocke 1) gebildeten ringnutenartigen Ausnehmung (12) mit axialem Spiel angeordnet und axial abgestützt ist,

und daß zwischen der Druckplatte (5) und der primären Drucklamelle (6) eine verdrehfest mit dem Kupplungsabtrieb (1) verbundene Kupplungslamelle (41) angeordnet ist.

2. Reibungskupplung nach Anspruch 1,

dadurch gekennzeichnet, daß die Druckvorrichtung durch den wellenförmig ausgebildeten und axial relativ zum Kupplungsantrieb (Kupplungsglocke 1) verschiebbaren Kupplungsabtrieb (1) gebildet,ist.

3. Reibungskupplung nach Anspruch 2,

gekennzeichnet durch ihre Anwendung in einer Kraftfahrzeug-Servolenkeinrichtung, bei der das Servomoment von einem vorzugsweise elektrischen Servomotor geliefert und über mindestens eine Reibungskupplung auf die Lenkwelle übertragen wird.

## Revendications

1. Embrayage à friction actionné par une force axiale, comprenant

a) plusieurs disques d'embrayage (disques extérieurs et intérieurs) à surfaces de friction discoïdales ou coniques, qui sont mobiles axialement et solidarisés en rotation en alternance avec un élément menant d'embrayage (cloche d'embrayage) et avec un élément mené d'embrayage concentrique à ce dernier,

b) un dispositif de serrage comprenant un plateau de serrage mobile axialement - par rapport aux disques d'embrayage - par lequel peut être exercée sur les disques d'embrayage une force axiale extérieure qui met ceux-ci en contact de friction produisant l'embrayage et

c) deux disques de serrage disposés en série avec le plateau de serrage et les disques d'embrayage et dont les surfaces tournées à l'opposé l'une de l'autre comportent des surfaces de friction correspondant à celles des disques d'embrayage, des éléments de surface qui sont ascendants et descendants axialement en forme de rampes, qui se correspondent les uns aux autres et qui sont concentriques à l'axe de rotation de l'embrayage étant disposés sur les surfaces des disques de serrage qui sont en face l'une de l'autre de manière que les disques de serrage appliqués l'un contre l'autre soient écartés axialement l'un de'''autre en présence d'une rotation relative et qu'ils exercent alors une force axiale supplémentaire sur les disques d'embrayage,

caractérisé en ce que les deux disques de serrage (6, 7) sont localisés entre le plateau de serrage (5) et les disques d'embrayage proprement dits (3, 4),

en ce que le disque secondaire de serrage (7) qui est éloigné du plateau de serrage (5) est déplaçable axialement, mais solidarisé en rotation avec l'élément menant de l'embrayage (cloche 1 d'embrayage), tandis que le disque primaire de serrage (6) qui est proche du plateau de serrage (5) est monté rotatif et il est disposé avec jeu axial et prend appui axialement par sa circonférence extérieure à l'intérieur d'une cavité (12) en forme de rainure annulaire qui est réalisée dans l'élément menant (cloche 1 de l'embrayage), et en ce qu'un disque d'embrayage (41) solidarisé en rotation avec l'élément mené (2) de l'embrayage est disposé entre le plateau de serrage (5) et le disque primaire de serrage (6).

2. Embrayage à friction selon la revendication 1, caractérisé en ce que le dispositif de serrage est formé de l'élément mené (2) de l'embrayage qui a la forme d'un arbre et qui est mobile axialement par rapport à l'élément menant de l'embrayage (cloche 1 de l'embrayage).

3. Embrayage à friction selon la revendication 2, caractérisé par son utilisation dans une direction assistée de véhicule automobile dans laquelle le couple d'assistance est délivré par un servomoteur de préférence électrique et transmis à l'arbre de direction par au moins un embrayage à friction.

## Claims

1. Axial-force-operated friction clutch, comprising:

a) several axially displaceable clutch disks (outer and inner disks) which are non-relatively-rotatably connected alternately to a clutch input (clutch housing) and to a clutch output concentric with the latter, and which have disk-shaped or conical friction surfaces,

b) a pressure device having a pressure plate axially displaceable relative to the clutch disks by means of which it is possible to apply to the clutch disks an external axial force bringing them into frictional clutching engagement, and

c) two pressure disks which are arranged in line with the clutch disks and of which the disk surfaces facing away from one another have frictional surfaces corresponding to the clutch disks and on whose opposing disk surfaces, each concentric to the axis of rotation of the clutch, are arranged respective corresponding surface regions which are inclined in the form of a ramp and rise and fall in such a way that the pressure disks lying against each other are pushed axially apart by relative rotation exerting an additional axial force on the disks,

characterised in that the two pressure disks (6, 7) are so arranged spatially between the pressure plate (5) and the actual clutch disks (3, 4),

that the secondary pressure disk (7) lying away from the pressure plate (5) is axially displaceable, but is connected to the clutch input (clutch housing 1) non-relatively-rotatably, whereas the primary pressure disk lying closer to the pressure plate (5) is rotatably journalled and is arranged with axial play and axially supported with its external periphery within an annular groove-like recess (12) formed in the clutch input (clutch housing 1),

and a clutch disk (41), non-relatively-rotatably connected to the clutch output (2), is arranged between the pressure plate (5) and the primary pressure disk (6).

2. Friction clutch as claimed in claim 1, characterised in that the pressure device is formed by the clutch output (2) which is axially displaceable relative to the clutch input (clutch housing 1) and is formed in the shape of a shaft.

3. Friction clutch as claimed in claim 2, characterised by its use in a vehicle servo-steering device, where the servo torque is provided by a preferably electric servo motor and transmitted by at least one friction clutch to the steering shaft.

Fig.1

Fig.2

7